# EUROPÄISCHE PATENTSCHRIFT

(11) **EP 0 641 998 B1**
(45) Veröffentlichungstag und Bekanntmachung des Hinweises auf die Patenterteilung: **03.11.1999**
(21) Anmeldenummer: 94113963.6
(22) Anmeldetag: 06.09.1994
(51) Int. Cl.: G01F 1/58, G01F 1/60

(54) **Vorrichtung zur Messung des Stroms einer ein Messrohr durchströmenden Flüssigkeit**
Device for flow measurement of a liquid flowing through a measuring tube
Dispositif pour la mesure de l'écoulement d'un liquide à travers d'un tube de mesure

(30) Priorität: 07.09.1993 DE 4330290
(43) Veröffentlichungstag der Anmeldung: 08.03.1995
(73) Patentinhaber: Fischer & Porter GmbH, D-37079 Göttingen (DE)
(72) Erfinder: Nissen, Peter, Dr., D-37124 Rosdorf (DE); Schäfer, Klaus, D-34346 Hann Münden (DE)
(74) Vertreter: Fincke, Karl Theodor, Dipl.-Phys. Dr.

(56) Entgegenhaltungen:
- EP-A- 0 547 751
- EP-A- 0 548 439
- DE-U- 9 103 046
- PATENT ABSTRACTS OF JAPAN vol. 009 no. 170 (P-373) ,16.Juli 1985 & JP-A-60 046418 (YAMATAKE HONEYWELL KK)

## Beschreibung

Die Erfindung betrifft eine Vorrichtung zur Messung des Stroms einer ein Meßrohr durchströmenden Flüssigkeit mit einer oberhalb des Meßrohrs angeordneten Spule, einer unterhalb des Meßrohrs angeordneten Spule und zwei an den Seiten des Meßrohrs einander gegenüberstehend angeordneten Elektroden, bei der die Spulen zur Erzeugung gleichsinniger und gegensinniger Magnetfelder erregbar sind und eine Korrekturschaltung vorgesehen ist, die die bei gleichsinnigen Magnetfeldern und Teilfüllung des Meßrohrs dem Strom der Flüssigkeit nur ungefähr proportionale Spannung zwischen den Elektroden zu einem dem Strom der Flüssigkeit bei Teilfüllung des Meßrohrs proportionalen Ausgangssignal mittels einer Korrekturfunktion zu einer korrigierten Spannung korrigiert, die von den Spannungen zwischen den Elektroden bei gleichsinnigen und gegensinnigen Magnetfeldern abhängt.

Vorrichtungen dieser Art sind bekannt, siehe z.B. DE-U-9 103 046. Mit ihnen sind meist brauchbare Meßwerte auch dann zu erhalten, wenn das Meßrohr nur teilgefüllt ist.

Bei Unregelmäßigkeiten des Strömungsprofils der das Meßrohr durchströmenden Flüssigkeit unterscheiden jedoch die bekannten Vorrichtungen nicht zuverlässig zwischen Vollfüllung und Teilfüllung, und dementsprechend können Meßfehler auftreten.

Um solche Meßfehler zu vermeiden, ist die Vorrichtung dadurch gekennzeichnet, daß an dem Meßrohr oben eine Elektrode zur Erfassung der Vollfüllung des Meßrohrs angeordnet ist und daß mit dem Potential dieser Elektrode eine Schalteinrichtung gesteuert wird, die bei Vollfüllung des Meßrohrs die den gleichsinnigen Magnetfeldern entsprechende Spannung als Ausgangssignal abgibt und bei Teilfüllung des Meßrohrs die korrigierte Spannung als Ausgangssignal abgibt.

Die Erfindung wird im folgenden an einem Ausführungsbeispiel unter Hinweis auf die beigefügten Zeichnungen erläutert.

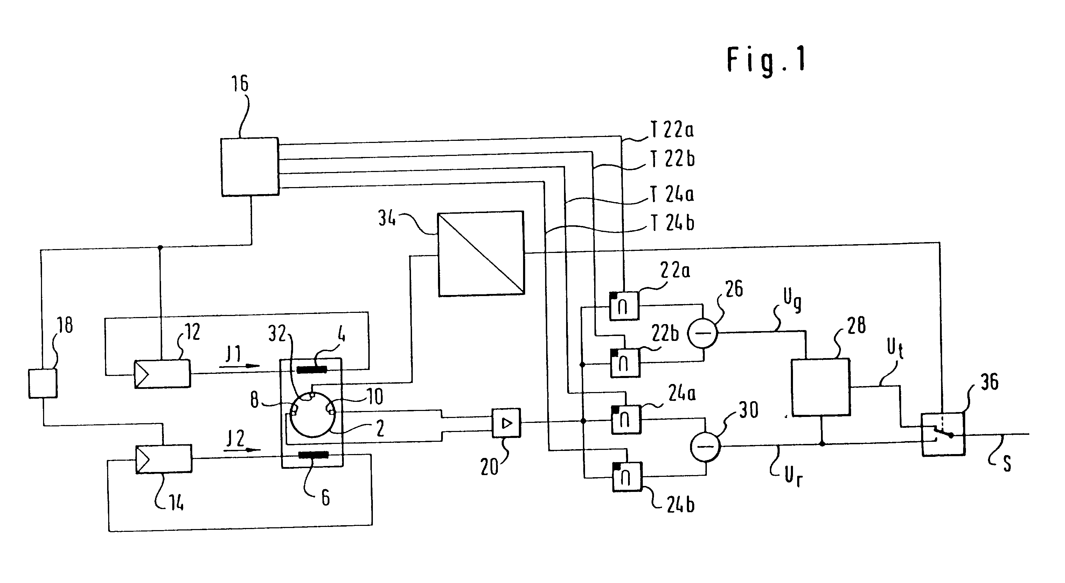

- Fig. 1: zeigt ein Schema einer erfindungsgemäßen Vorrichtung mit zugehöriger Schaltung.

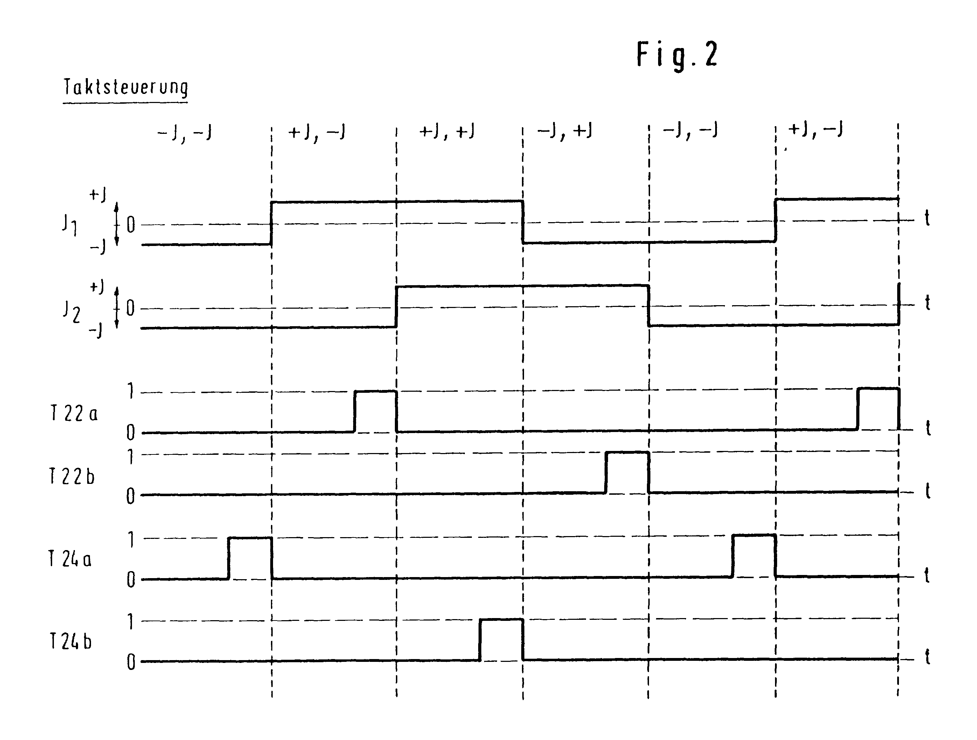

- Fig. 2: zeigt Strom- und Signalverläufe in der Vorrichtung nach Fig. 1.
- Fig. 3: zeigt eine Korrekturkurve.

Die Vorrichtung nach dem Ausführungsbeispiel weist ein Meßrohr 2 auf, eine oberhalb des Meßrohrs 2 angeordnete Spule 4 und eine unterhalb des Meßrohrs 2 angeordnete Spule 6 sowie zwei an den Seiten des Meßrohrs 2 einander gegenüberstehend angeordnete Elektroden 8, 10.

Die Spulen 4, 6 sind zur Erzeugung gleichsinniger und gegensinniger Magnetfelder durch Treiber 12, 14 erregbar. Diese Treiber 12, 14 geben in ihrer Phase um 90° gegeneinander versetzte Rechteckströme ab und werden entsprechend von einem Taktgeber 16 und einem Phasenschieber 18 gesteuert.

Die Spannung zwischen den Elektroden 8, 10 wird den Eingängen eines Differenzverstärkers 20 zugeführt, dessen Ausgang mit Eingängen von Haltegliedern 22a, 22b, 24a, 24b verbunden ist. Die Halteglieder 22a, 22b, 24a, 24b sind den vier verschiedenen Zuständen der beiden um 90° gegeneinander versetzten Rechteckströme zugeordnet, mit denen die Spulen 4, 6 beschickt werden.

Auch die Steuerung der Halteglieder 22a, 22b, 24a, 24b erfolgt durch den Taktgeber 16.

Die Ausgänge der Halteglieder 22a, 22b sind über ein Subtrahierglied 26 mit einem Eingang einer Korrektureinheit 28 verbunden. Die Ausgänge der Halteglieder 24a, 24b sind über ein Subtrahierglied 30 mit einem anderen Eingang der Korrektureinheit 28 verbunden.

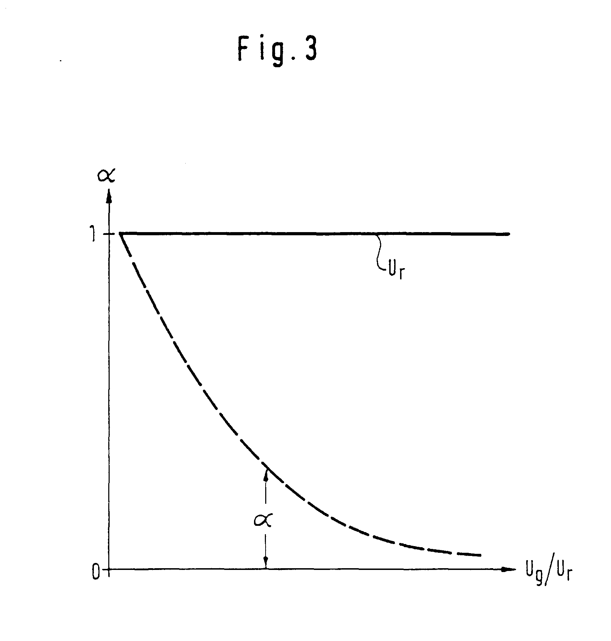

Das Subtrahierglied 26 liefert an die Korrektureinheit 28 eine Spannung U_{g}. Das Subtrahierglied 30 liefert an die Korrektureinheit 28 eine Spannung Uᵣ. Aus diesen Spannungen U_{g} und Uᵣ leitet die Korrektureinheit 28 u. a. durch Quotientenbildung von U_{g} und Uᵣ einen Korrekturfaktor α ab, der aus Fig. 3 ersichtlich ist, und liefert eine Spannung Uₜ = Uᵣ · α , die dem Strom durch das Meßrohr 2 bei Teilfüllung des Meßrohrs 2 proportional ist. Die Spannung Uᵣ ist bei Vollfüllung des Meßrohrs 2 diesem Strom proportional.

An dem Meßrohr 2 ist oben zur Erfassung einer Vollfüllung eines Meßrohrs eine Elektrode 32 vorgesehen, mittels deren Potential eine Schalteinrichtung 34, 36 gesteuert wird, die bei Vollfüllung des Meßrohrs 2 die den gleichsinnigen Magnetfeldern entsprechende Spannung Uᵣ als Ausgangssignal S abgibt und bei Teilfüllung des Meßrohrs 2 die Spannung Uₜ als Ausgangssignal S abgibt.

## Patentansprüche

1. Vorrichtung zur Messung des Stroms einer ein Meßrohr (2) durchströmenden Flüssigkeit mit einer oberhalb des Meßrohrs (2) angeordneten Spule (4), einer unterhalb des Meßrohrs (2) angeordneten Spule (6) und zwei an den Seiten des Meßrohrs (2) einander gegenüberstehend angeordneten Elektroden (8, 10), bei der die Spulen (4, 6) zur Erzeugung gleichsinniger und gegensinniger Magnetfelder erregbar sind und eine Korrekturschaltung (28) vorgesehen ist, die die bei gleichsinnigen Magnetfeldern und Teilfüllung des Meßrohrs (2) dem Strom der Flüssigkeit nur ungefähr proportionale Spannung (Uᵣ) zwischen den Elektroden (8, 10) zu einem dem Strom der Flüssigkeit bei Teilfüllung des Meßrohrs (2) proportionalen Ausgangssignal (S) mittels einer Korrekturfunktion zu einer korrigierten Spannung (Uₜ) korrigiert, die von den Spannungen (Uᵣ, U_{g}) zwischen den Elektroden bei gleichsinnigen und gegensinnigen Magnetfeldern abhängt, **dadurch gekennzeichnet**, daß an dem Meßrohr (2) oben eine Elektrode (32) zur Erfassung der Vollfüllung des Meßrohrs (2) angeordnet ist und daß mit dem Potential dieser Elektrode (32) eine Schalteinrichtung (34, 36) gesteuert wird, die bei Vollfüllung des Meßrohrs (2) die den gleichsinnigen Magnetfeldern entsprechende Spannung (Uᵣ) als Ausgangssignal (S) abgibt und bei Teilfüllung des Meßrohrs (2) die korrigierte Spannung (Uₜ) als Ausgangssignal (S) abgibt.

## Claims

1. A device for measuring the flow of a fluid flowing through a measuring pipe (2), comprising
a coil (4) arranged above said measuring pipe (2),
a coil (6) arranged below said measuring pipe (2), and
a pair of electrodes (8, 10) facing one another on the sides of said measuring pipe (2),
wherein the coils (4, 6) are excitable for producing aiding and opposing magnetic fields, and
a correction circuit (28) is provided for correcting the voltage (Uᵣ) between said electrodes (8, 10) only approximately proportionate to the flow of the fluid in the presence of aiding magnetic fields and partial filling of said measuring pipe (2) to an output signal (S) proportionate to the flow of the fluid when the measuring pipe (2) is partly filled by means of a correction function to a corrected voltage (Uₜ) depending on the voltages (Uᵣ, U_{g}) between the electrodes in the presence of aiding and opposing magnetic fields,
characterized in
that an electrode (32) is arranged at the top of said measuring pipe (2) for detecting complete filling of said measuring pipe (2), and
that by means of the potential of said electrode (32) circuit means (34, 36) are controlled which when the measuring pipe (2) is completely filled generate the voltage (Uᵣ) corresponding to the aiding magnetic fields as an output signal (S) and when the measuring pipe (2) is partly filled generate the corrected voltage (Uₜ) as an output signal (S).

## Revendications

1. Dispositif pour la mesure de l'écoulement d'un liquide à travers un tube de mesure (2), comportant une bobine (4) agencée au-dessus du tube de mesure (2), une bobine (6) agencée au-dessous du tube de mesure (2) et deux électrodes (8, 10) agencées en vis-à-vis l'une de l'autre sur les côtés du tube de mesure (2), dans lequel les bobines (4, 6) sont excitables afin de générer des champs magnétiques de sens égal et de sens opposé et dans lequel est prévu un circuit de correction (28) qui, lorsque les champs magnétiques sont de sens égal et que le tube de mesure (2) est rempli en partie, corrige la tension (Uᵣ) entre les électrodes (8, 10) qui n'est qu'approximativement proportionnelle à l'écoulement du liquide par rapport à un signal de sortie (S) proportionnel à l'écoulement du liquide pour un remplissage partiel du tube de mesure (2) au moyen d'une fonction de correction, pour former une tension corrigée (Uₜ) qui dépend des tensions (Uᵣ, U_{g}) entre les électrodes lorsque les champs magnétiques sont de sens égal et de sens opposé, caractérisé en ce qu'il est prévu en haut sur le tube de mesure (2) une électrode (32) pour détecter le remplissage complet du tube de mesure (2), et en ce qu'un organe de commutation (34, 36) est commandé avec le potentiel de cette électrode (32), qui, lors d'un remplissage complet du tube de mesure (2), émet en tant que signal de sortie (S) la tension (Uᵣ) correspondante aux champs magnétiques de sens égal et qui, lors d'un remplissage partiel du tube de mesure (2), émet en tant que signal de sortie (S) la tension corrigée (Uₜ).
